# EUROPEAN PATENT SPECIFICATION

(11) **EP 3 228 395 B1**
(45) Date of publication and mention of the grant of the patent: **27.04.2022**
(21) Application number: 14907344.7
(22) Date of filing: 03.12.2014
(51) Int. Cl.: B08B 3/00, B08B 3/14, B08B 9/00, B08B 17/02, A23N 12/02, A23B 7/153, B05B 16/00, B05B 14/00, B05B 16/20, B05B 14/44, B05B 14/41, B05B 14/40, B08B 15/02, B08B 17/00, B60S 3/04, B08B 3/02, B08B 9/093, B05B 13/04, B05B 13/06

(54) **TOOL FOR CHANNELLING THE LIQUID PROJECTED AND/OR SPRAYED BY EQUIPMENT FOR APPLYING PHYTOSANITARY PRODUCTS**
WERKZEUG ZUM KANALISIEREN DER VON EINER AUSRÜSTUNG ZUR VERWENDUNG PHYTOSANITÄRER PRODUKTE PROJIZIERTEN UND/ODER GESPRITZTEN FLÜSSIGKEIT
OUTIL POUR CANALISER LE LIQUIDE PROJETÉ ET/OU PULVÉRISÉ PAR DES ÉQUIPEMENTS D'APPLICATION DE PRODUITS PHYTOSANITAIRES

(43) Date of publication of application: 11.10.2017
(60) Divisional application: 19191772.3
(73) Proprietor: Herreros Muñoz, Ana Victoria, 23310 Mogón (ES); Marín Zamora, Diego Javier, 23310 Mogón (ES)
(72) Inventor: Herreros Muñoz, Ana Victoria, 23310 Mogón (ES); Marín Zamora, Diego Javier, 23310 Mogón (ES)
(74) Representative: Elzaburu S.L.P.
(86) International application number: PCT/ES2014/000205
(87) International publication number: WO 2016/087684

(56) References cited:
- WO-A1-96/03349
- WO-A1-96/03349
- WO-A1-2005/028267
- DE-A1- 4 200 286
- ES-A1- 2 527 114
- ES-T3- 2 052 351
- FR-A1- 2 815 891
- FR-A1- 2 815 891
- FR-A1- 2 891 994
- JP-A- S53 109 767
- TW-U- M 479 088
- US-A- 3 098 520
- US-A- 5 033 489
- US-A- 5 033 489
- US-A- 5 597 001
- US-A- 5 759 286
- US-A1- 2009 188 535
- DATABASE WPI Derwent Publications Ltd., London, GB; XP008185032 & DD 132 261 A1 (SCHMALAND GERHARD ET AL.) 13 September 1978

## Description

### Object of the invention

This invention relates to a tool for channelling the liquid projected and/or sprayed by equipment for applying phytosanitary products to means for collecting liquid.

### State of the art

It is known that there is no specific or appropriate place for collecting the surplus liquid from the treatments carried out using equipment for applying phytosanitary products and the liquid from the cleaning of equipment for applying phytosanitary products. Neither is there a specific or appropriate place for cleaning and/or replenishing equipment for applying phytosanitary products.

What is usually done with the surplus liquid from treatments carried out with equipment for applying phytosanitary products is that it is diluted it with water, by adding water to the said equipment for applying, and the treated area is treated again.

Users of equipment for applying phytosanitary products usually clean the said equipment manually in the same place where they replenish the water (water sources, rivers, private houses, in the street, vehicle washing areas, etc.) or use the said equipment to clean itself inside and out by means of manual application nozzles if the equipment has these.

Another option for cleaning is to use hoses or pressurised water appliances in the above-mentioned places.

To clean equipment for applying phytosanitary products, internal cleaning, including pipes and pressure pump, and external cleaning need to be performed after each use.

The equipment for applying phytosanitary products used currently must have an auxiliary tank with a capacity of 10% of the main tank for rinsing the latter, although not all equipment has the said auxiliary tank. It is important to open all the taps for the circuits, so that residues do not remain in the pipes, and drain the tank as far as possible after each rinse. Treating the treated area again is recommended to eliminate the water.

The recommendation is that cleaning is performed in a controlled area where there is no risk of contamination and there are means for collecting the liquid from cleaning.

Users replenish phytosanitary products in equipment for applying by adding the phytosanitary product manually in the said equipment.

Mixing of phytosanitary products is carried out manually by the users of the said equipment for applying and it is then added to the equipment for applying phytosanitary products.

One disadvantage is the contamination that occurs in the environment when more phytosanitary products than recommended are applied to crops or to the environment, and when equipment for applying is cleaned in inappropriate places. A large amount of phytosanitary product packaging is also dumped or lost, as although there are rules for controlling the said packaging, the amount of phytosanitary product packaging used is so great that it is very difficult to control all the packaging.

Another disadvantage is exposing people, directly or through personal protective equipment, to phytosanitary products when they clean equipment for applying phytosanitary products, mix phytosanitary products and replenish the said equipment.

Document FR2815891 describes a washer comprises used-water tank under pair of perforated tracks on which machine stands during cleaning; and folding tunnel extendable over machine and tank during washing and rinsing to confine water and allow for recovery in tank by gravity, especially by flowing along tunnel inner wall. The washer, especially for crop-spraying machines, has a tank for collecting used water, located underneath a pair of perforated tracks on which the machine stands during cleaning. It also has a folding tunnel that can be extended over the machine and tank during washing and rinsing operations to confine the water and allow it to be recovered in the tank by gravity, especially by flowing along the inner wall of the tunnel. The tank is situated at least partly above ground level and connected to a used water treatment installation divided into sections with filtration/treatment units in each, and access to the perforated tracks is provided by ramps. Document WO96/03349 describes a method and apparatus for washing agricultural products with recycled, purified water is disclosed. Contaminated wastewater is recovered in catch basin and then conveyed to a sump tank for storage. Water from sump tank is then conveyed via lines, where a coagulant is added, to a first coagulation compartment of a vessel. Purified water from compartment exits into second compartment of vessel. The further purified underflow from compartment is transferred to ozone contact tank. Thus decontaminated water is returned to the spray nozzles of a washing station.

Document US2009/188535 describes a wash pad and wash fluid containment system upon which items are positioned and supported for collecting wastewater occasioned when washing the items, the system having various combinations of the following: a central trench, left and right side wash pad sections positioned on opposite sides of the central trench, the left and right side wash pad sections preferably being of identical configuration and interchangeable, each side wash pad section having a sloped surface for directing wastewater toward the central trench; a partial side wall enclosure assembly disposed about an outer perimeter of three sides of the wash pad; integrated pressure washer system mounted on the rear wall; a retractable cover assembly including a tarp wrapped on a roller mounted on the rear wall; side wall extension system extending above the side walls including a frame and tarp sections hanging on the frame.

Document WO2005/028267 describes a self-contained portable wash bay (10) comprising a wash area (20) sufficient to accommodate a vehicle, a ramp (27) associated with said wash area to allow vehicle access, a water delivery system to deliver water within the wash area, a catchment (30) below the wash area (20) to catch the run-off water delivered within the wash area, and a circulation system to circulate the water from the catchment (30) to the delivery system.

Document US 5 033 489 A discloses a tool corresponding to the preamble of appended claim 1.

However, none of the above documents describe means for selecting a specific profile for a channelling tool.

### Summary

The purpose of this invention is to resolve the aforementioned disadvantages by developing a tool for channelling the liquid projected and/or sprayed by equipment for applying phytosanitary products to means for collecting liquid according to claim 1.

### Brief explanation of the drawings

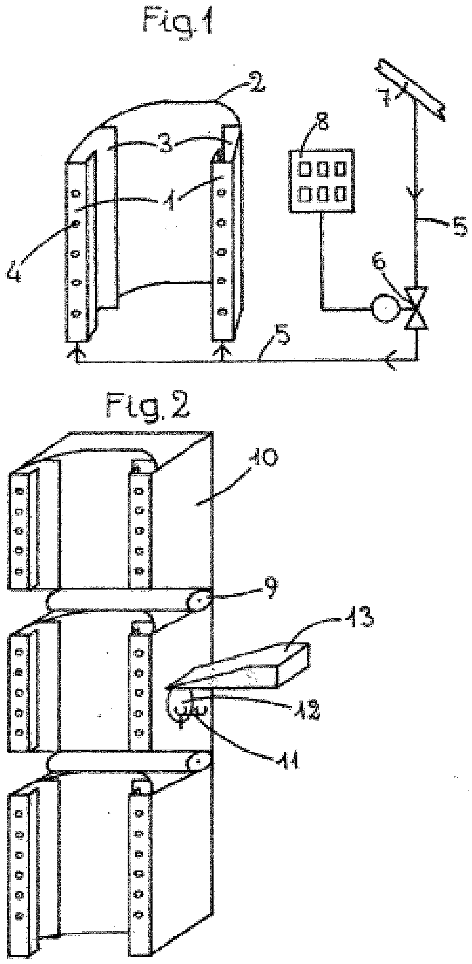

To improve understanding of the above, figures 1 and 2 are attached that, schematically and only by way of example, without being limiting, represent a practical embodiment of the invention defined by claim 1. In the said drawings:
Figure 1 shows a view of the tool for channelling the liquid projected and/or sprayed by equipment for applying phytosanitary products according to the invention defined in claim 1, showing the longitudinal folds (1) in the two side parts that define a U-shaped channel. Also shown in the internal face of the U-shaped body are two longitudinal fins (3), also the mechanisms that project and/or spray water (4) disposed on the longitudinal folds and the schematic representation of the supply to the said mechanisms, in which a water supply pipe (7) can be seen connecting to another pipe (5) that supplies the said mechanisms and is controlled by a solenoid valve (6) that in turn is controlled by a control panel (8).
Figure 2 shows a view of the connection of several tools according to the invention, as in figure 1, forming an articulated column, showing the articulated joints (9) that enable the said column to adapt to the different projections and/or spraying of the different items of equipment for applying phytosanitary products. It also shows the means for securing a manual application nozzle for the latter to project and/or spray liquid into the said tool, showing a bracket (11) located in the external part of the said tool with two U-shaped supports aligned with an opening (12) in the said tool. Also shown is the cover (13) that holds the said nozzle against the supports and covers the said bracket and closes the said opening if the equipment for applying does not have the said manual application nozzles.

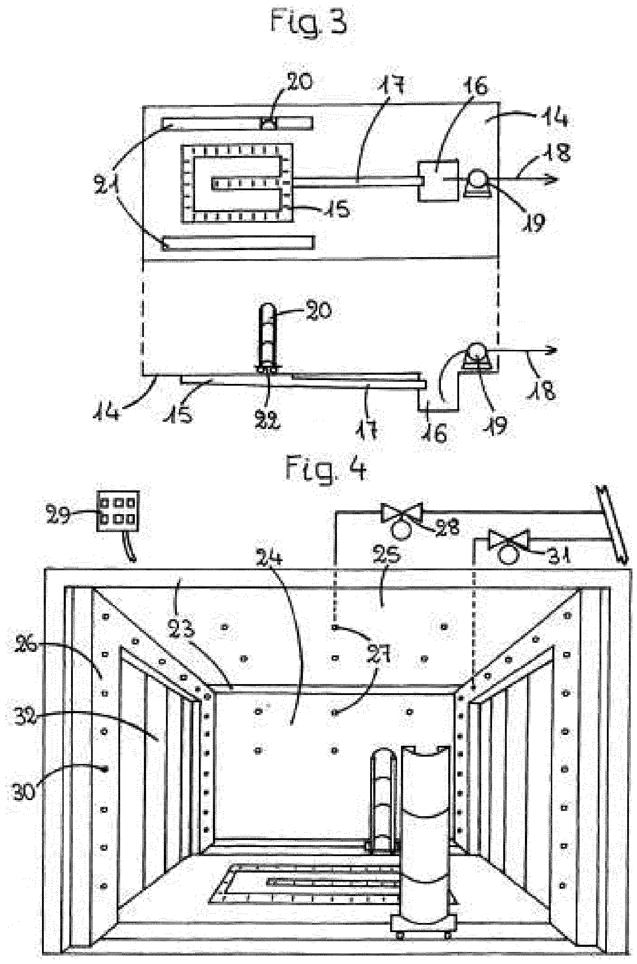

Figure 3 shows a plan view above a cross-sectional view of a machine for collecting liquid with surplus phytosanitary products from treatments carried out using equipment for applying phytosanitary products which is not according to the invention but which will be described in different forms to help understand the invention defined by appended claims 1 to 3, showing a floor (14), a sump (15) arranged on the said floor, a pit (16) connected to the said sump by means of an underground pipe (17), such that the said assembly collects the liquid deposited on the said floor into the said pit. Also represented are a pipe (18) with an impulse pump (19) to draw the liquid out of the pit. A tool for channelling the liquid projected and/or sprayed by equipment for applying (20) can also be seen arranged on a rail (21) and on a wheeled platform (22) to move it.
Figure 4 shows an interior view of the liquid collection zone of the machine, showing a metal structure (23) supporting an isolating wall (24) and an isolating roof (25) and two isolating doors (26). Also seen in the said wall and roof are a plurality of mechanisms that project and/or spray water (27), with a schematic representation of their water supply controlled by a solenoid valve (28), which, in turn, is controlled by a control panel (29), which can be the same panel as for the tool for channelling liquid projected and/or sprayed if it has one. Also shown in the isolating doors are a plurality of mechanisms that project and/or spray water (30) and a schematic representation of their water supply controlled by a solenoid valve (31), which, in turn, is controlled by the said control panel, and also seen in the said doors is a curtain formed of a plurality of plastic strips (32).

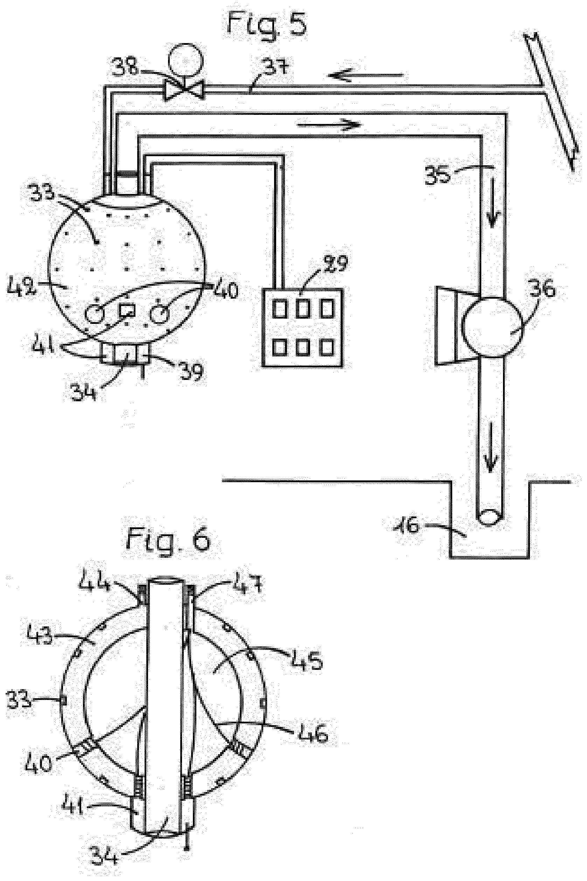

Figure 5 shows a view of a tool for cleaning the inside of equipment for applying phytosanitary products, which projects and sucks up liquid, showing a plurality of mechanisms that project water (33) and a tube to suck up liquid (34), such that the said tube is connected, by means of a pipe (35) with a suction pump (36) to the said pit (16) such that the liquid sucked up is collected in the said pit. It also shows represents the water supply to the said plurality of mechanisms that project water that are connected to a water supply via a pipe (37) controlled by a solenoid valve (38), which, in turn, is controlled by the said control panel (29). Some components of the electrical system are also shown, such as a limit switch (39), two proximity sensors (40) and two liquid level sensors (41) controlled by the said control panel for coordinated operation of the tool. Also shown is the housing (42) in which the mechanisms that project water and the electrical mechanisms are arranged and that is crossed by the said tube to suck up liquid.
Figure 6 shows a cross section of the tool in figure 5, showing two layers inside the housing, showing how the mechanisms that project water (33) are arranged in the surface of the said housing, penetrating to the outermost internal layer (43) that has a tube (44) for water supply. Also shown is how the proximity sensors (40) are arranged in the outermost part of the said housing such that they cross the said outermost layer and penetrate to the innermost layer (45) where the cables (46) are installed that exit the said layer in a tube (47) to connect to the said control panel. The tube to suck up liquid (34) that crosses the housing can also be seen.

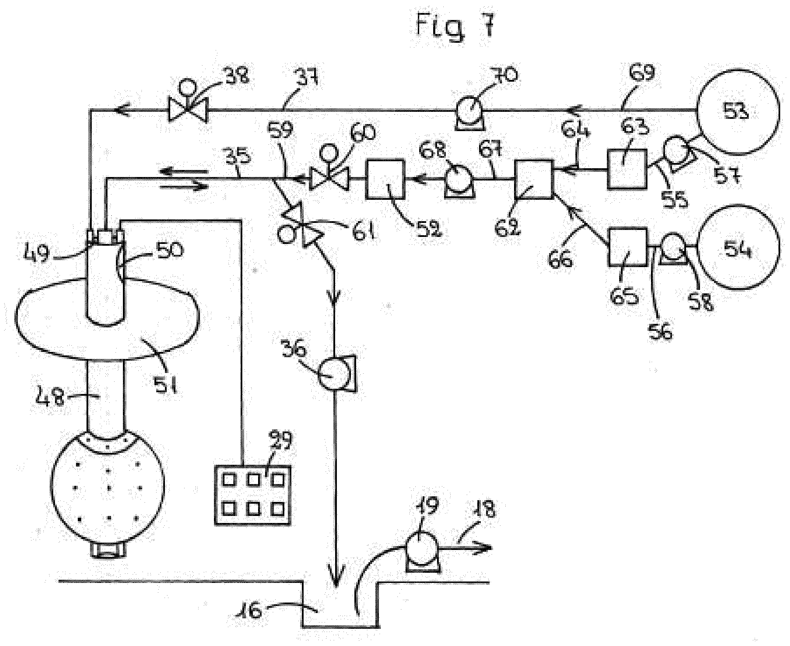

Figure 7 shows a view in which the joint between a tool such as in figure 5 and a rod or handle (48), screwed by one end to the said tool, can be seen. It also shows how the pipes that connect to the tool exit the said rod or handle through the opposite end to the tool (49), which can also exit through a lateral opening (50) in the said end. Also shown is a flat part (51) to close the filler neck of the equipment for applying, which is crossed by the rod or handle through the central part. It also schematically represents the means for replenishing the said machine, in which a dosing unit for water and/or phytosanitary product (52), a refillable tank to store water (53) and a refillable tank to store phytosanitary product (54) are represented, where each tank is connected to a pipe (55)(56) with an impulse pump (57)(58). The said dosing unit supplies water and/or phytosanitary product to the said equipment for applying by means of a pipe (59) that is connected to the said pipe that connects to the tube that crosses the housing of the internal cleaning tool of the said equipment for applying, to suck up liquid (35). The actions of sucking up or supplying are controlled by two solenoid valves (60)(61) that operate alternately by switching the said pipes and that are controlled by the said control panel. Also represented schematically are the means for making the mixture, formed of a mixer of phytosanitary products and water (62), supplied by a water dosing unit (63) by means of a pipe (64) and supplied by a phytosanitary product dosing unit (65) by means of a pipe (66). The said assembly is connected in the said machine in such a way that the said mixture is supplied by means of a pipe (67) with an impulse pump (68) to the dosing unit that supplies phytosanitary product and/or water (52) to the said equipment for applying. The said water dosing unit (63) is supplied by the said refillable water tank (53) by means of the said pipe (55) with the said impulse pump (57) and the said product dosing unit is supplied by the said refillable phytosanitary product tank (54) by means of the said pipe (56) with the said impulse pump (58). Also represented is how the said refillable water tank (53) supplies the mechanisms of the said tool that project water, showing a pipe (69) that connects the said refillable tank to an impulse pump (70) that in turn supplies the said pipe (37) controlled by a solenoid valve (38), which supplies the plurality of mechanisms of the tool that project water for cleaning the inside of equipment for applying.

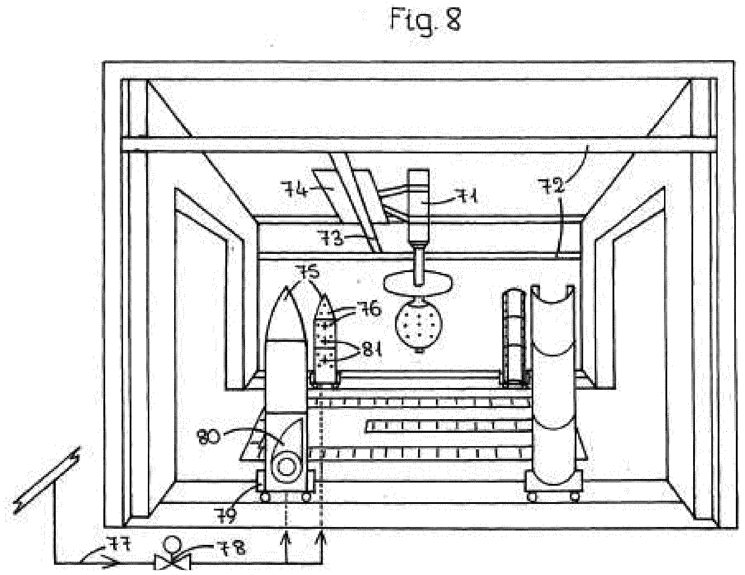

Figure 8 shows an interior view of the liquid collection zone of the machine, showing a telescopic cylinder (71) that is joined by it moveable part to the rod or handle that, in turn, at its other end, is joined to the said tool as of figure 5. Also shown supported by the said structure are two rails (72) on which a moveable bridge (73) is shown on which is a moveable platform (74) that supports the said telescopic cylinder. It also shows two tools for cleaning the outside of the equipment for applying phytosanitary products (75), schematically representing a plurality of mechanisms that project and/or spray water (76), connected by means of a pipe (77) to a water supply controlled by a solenoid valve (78). Also shown are the two wheeled platforms (79) on the rails laid on the floor, such that the said tools are installed on the said wheeled platforms and a turbine (80) can also be seen in the rear part of the said tool, which supplies air to a plurality of mechanisms that project air (81) arranged in the front part of the said tool.

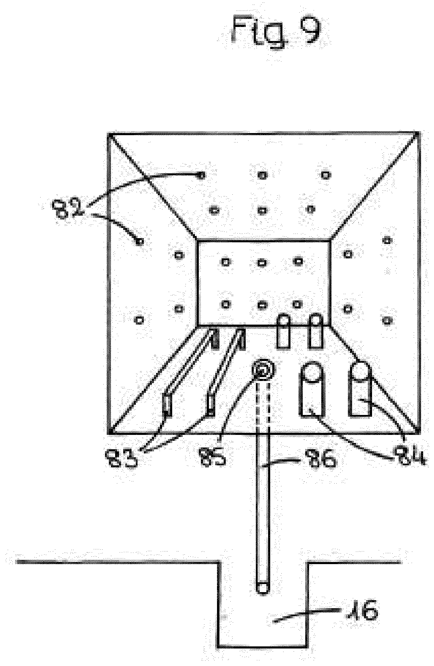

Figure 9 shows an internal view of an apparatus for cleaning the cover and filter of the equipment for applying, showing a plurality of mechanisms that project water (82) in the walls and roof, two brackets to hold the cover (83), four brackets to hold the filter (84) and a sump (85) from which the liquid is transferred by means of a pipe (86) to the said pit (16) to be collected.

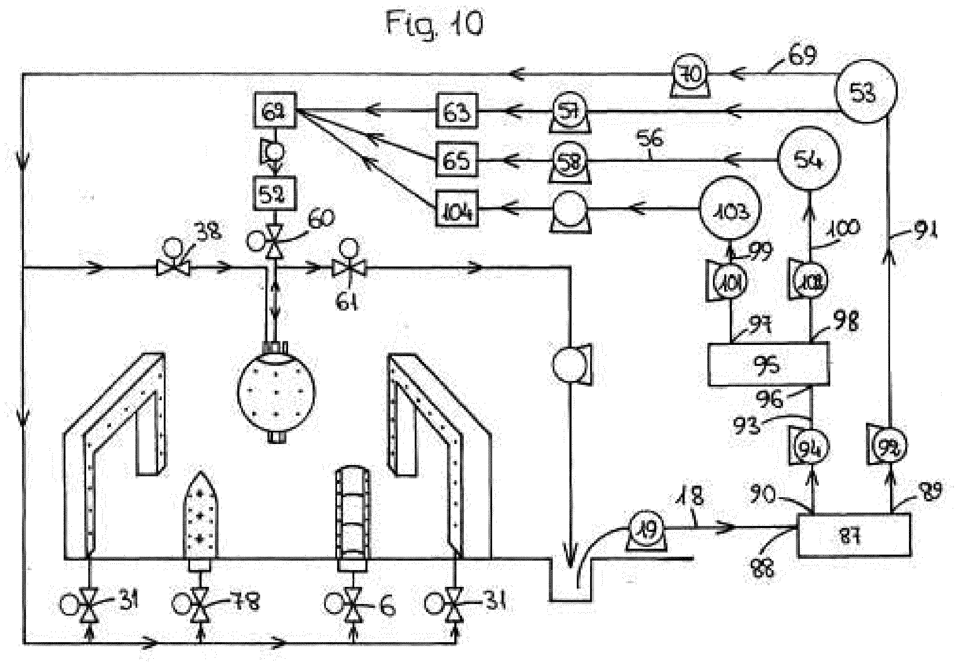

Figure 10 shows the operation of the said installation for recycling phytosanitary product schematically, represented in which are a water purifier (87) to separate the water from the phytosanitary products, which has an inlet for liquid with phytosanitary products (88), a water outlet (89) and a phytosanitary product outlet (90). Also represented is the connection of the pipe (18) used to draw the liquid out of the pit of the said machine to the liquid inlet to the purifier to supply it. It also represents the connection of the water outlet of the purifier to the said refillable water tank (53) of the machine by means of a pipe (91) with an impulse pump (92). It also shows the connection of the phytosanitary product outlet from the purifier, by means of a pipe (93) with an impulse pump (94), to a phytosanitary product separator (95) at the phytosanitary product inlet (96) of the said separator. The said separator also has two different phytosanitary product outlets (97) and (98), each of which connects, by means of a pipe (99) and (100) with an impulse pump (101) and (102), to a refillable phytosanitary product tank (54) and (103) of the machine. Some machine components are also shown with the schematic representation of the water supply to the said components, which is controlled by solenoid valves (6), (31) and (78). Also represented is the connection of the means for replenishing and for mixing of figure 7 in the installation. It also represents the circulation of the liquid with phytosanitary products, of the phytosanitary products and of the water by means of arrows on the pipe representations.

### Description

The tool according to the invention defined by claim 1 is the tool for channelling the liquid projected and/or sprayed by equipment for applying phytosanitary products (figure 1), comprising an essentially concave hollow body, with a central part recessed with respect to the two side parts, defining a U-shaped channel, it comprises on each side part at least one longitudinal fold (1) oriented towards the concave part of the said body, which in combination with the said side part defines a V- to U-shaped channel designed to prevent the said liquid from escaping from the said body by the said side parts and to channel the said liquid inside it into the concave part of the body.

The said tool is positioned opposite the nozzles of the equipment for applying phytosanitary products such that the said equipment projects and/or sprays the liquid into the concave part of the said body. The liquid is channelled by the said tool to any means of collection, with the liquid exiting the tool by at least one curved side (2) of the said body, depending on its position.

The said tool comprises a plurality of longitudinal fins (3) in the concave part of the U-shaped body and oriented towards the central, most deeply recessed part of the said body, such that each one forms a V-shaped channelling unit and the assembly formed channels the said liquid in a U-shape, using the concave surface of the said tool as the common side part of the said V-shaped channelling units.

According to the invention, said tool comprises means for projecting and/or spraying water, which, in turn, comprise a plurality of mechanisms that project and/or spray water (4) disposed in the longitudinal folds in the front part of the tool and oriented such that with their projection and/or spray they direct in the desired direction the splashes that may be produced when the equipment for applying projects and/or sprays liquid onto the said tool. The said mechanisms are connected, by means of a pipe (5) with a solenoid valve (6), to a water supply network (7) and the said solenoid valve is controlled by a control panel (8).

According to another embodiment, the said tool (figure 2) comprises connecting means to join it to another tool of those described previously, which, in turn, comprises at least one articulated joint (9), such that the assembly formed makes it possible to arrange the different forms of the said tool to adapt to the projections and/or spraying of the different types of equipment for applying phytosanitary products.

The said tool comprises a housing (10) arranged to cover the rear or convex part of the said tool, in addition to the possible circuits that the said tool may hold.

According to another embodiment, the said tool comprises means for securing at least one manual application nozzle for cleaning it, which, in turn, comprises a bracket (11) located in the external part of the said tool with two U-shaped supports aligned with an opening (12) in the said tool, such that by supporting the manual treatment nozzle on the said supports it is opposite the said opening, through which it projects and/or sprays liquid into the interior of the said tool for it to be channelled. The said means also comprises a cover (13) arranged on the said opening, which by allowing it to support itself on the manual application nozzle, holds the said nozzle against the supports, and covers the said bracket and closes the said opening if the equipment for applying does not have the said manual application nozzles.

To carry out liquid collection, according to a method, the said machine will be used to collect liquid with surplus phytosanitary products from treatments carried out with equipment for applying phytosanitary products (figure 3), comprising means for collecting liquid, which, in turn, comprises a floor (14), a sump (15) arranged on the said floor, a pit (16) connected to the said sump by means of an underground pipe (17), such that the said assembly collects the liquid deposited on the said floor into the said pit, which, in turn, comprises a pipe (18) with an impulse pump (19), it comprises means for channelling the liquid projected and/or sprayed by equipment for applying phytosanitary products to the said means for collecting liquid, which, in turn, comprises at least one tool for channelling the said liquid (20), such as any of those described previously, installed on the said floor, such that the liquid channelled by the said tool, by means of the cited means of collection, is collected in the said pit.

The said means for drawing the liquid from the pit may be used to transfer the liquid to another place or to charge the liquid into a means of transport.

The equipment for applying would be located on the said floor and with the application nozzle(s) of the said equipment facing at least one tool to channel its projection and/or spray to the said means to collect liquid.

This can collect the surplus liquid from treatments carried out with equipment for applying phytosanitary products and/or liquid resulting from the manual cleaning of equipment for applying phytosanitary products, to avoid exposing the environment to the phytosanitary products present in the said liquids and to be able to treat them subsequently to obtain the phytosanitary product for use.

According to another form, taking the previous into account, the said machine comprises means for moving the said at least one tool that channels the liquid projected and/or sprayed by equipment for applying phytosanitary products. The said means comprises at least one rail (21) laid on the said floor and a wheeled platform (22) on which the said at least one tool is arranged and that moves in a controlled manner on the said rail. In this way, the said tool can be located opposite the nozzles or means of projection and/or spraying of the said equipment for applying. It can be positioned manually or mechanically.

According to another form the said machine comprises means of isolation to delimit the liquid collection zone of the said machine (figure 4) and to isolate the said zone from the external environment, inside the said zone is where the equipment for applying for projecting and/or spraying liquid is located. The said means of isolation in turn comprises a metal structure (23) that supports two isolating walls (24) and one isolating roof (25) and two isolating doors (26). In turn, the said walls and roof comprises a plurality of mechanisms that project and/or spray water (27) connected to a water supply controlled by a solenoid valve (28), which, in turn, is controlled by a control panel (29), which can be the same as that of the said tool that channels the liquid projected and/or sprayed if same has a control panel, and arranged such that on projecting and/or spraying water, the possible splashes that may occur in the liquid collection zone fall to the floor of the said machine. In turn, the said isolating doors comprises a plurality of mechanisms that project and/or spray water (30), connected to a water supply controlled by a solenoid valve (31), which, in turn, is controlled by the said control panel, arranged in such a way that when operating they form a curtain of water that prevents splashes with phytosanitary products that may be volatile from escaping through the said door and drives the said splashes to the said floor so that they are finally collected in the said pit. The said doors may also comprise a curtain formed of a plurality of plastic strips (32) that open and close the said door and isolate the said liquid collection zone from the external environment.

The said machine comprises means for regulating the size of the liquid collection zone of the said machine, which, in turn, comprises two wheeled platforms for each isolating door that can move in a controlled manner along two parallel rails laid on the floor of the said machine, such that each support base for each door is disposed on a wheeled platform on a different rail.

To carry out the internal cleaning of the equipment for applying phytosanitary products, including inside the pipes and pressure equipment of same, the said machine comprises means for cleaning the inside of equipment for applying phytosanitary products, which, in turn, comprises a tool that projects water and sucks up liquid (figure 5), comprising in turn a plurality of mechanisms that project water (33) and a tube to suck up liquid (34), such that the said tube is connected, by means of a pipe (35) with a suction pump (36), to the said pit (16) such that the water sucked up is collected in the said pit, and the said plurality of mechanisms that project water are connected to a water supply by means of a pipe (37) controlled by a solenoid valve (38), which, in turn, is controlled by the said control panel (29).

To operate, the said tool in turn comprises at least one limit switch (39) that activates the operation of the said tool once inserted inside the tank of the equipment for applying, at least one proximity sensor (40) to insert the said tool in the said equipment for applying without damaging either the tool or the equipment, and two liquid level sensors (41) to activate the said pump and the said solenoid valve when appropriate, such that the said electrical mechanisms are controlled by the said control panel. The said tool comprises a spherical or oval housing (42), in any material, in which the said plurality of mechanisms that project water and the said electrical mechanisms are arranged and which is crossed by the said tube to suck up liquid.

It also comprises, inside the said housing (figure 6), two independent layers, such that the said outermost layer (43) is connected by means of a tube (44) to the said water supply and the said plurality of mechanisms that project water are arranged fixed on the surface part of the said housing, penetrating to the said layer to receive a supply of water to project, and such that the mechanisms of the electrical system are arranged in the outer part of the tool, crossing the said outermost layer and penetrating to the innermost layer (45), such that the cables (46) for the electrical system mechanisms are installed inside the innermost layers and the cables exit the tool through a tube (47) and connect to the said control panel.

The said tool is inserted into the tanks of the said equipment for applying in operation and located in the liquid collection zone of the said machine to, once inside, project water to clean the equipment for applying internally and suck up the said liquid with phytosanitary products to collect it in the said means for collecting liquid. By performing these actions several times, the said equipment is rinsed more effectively and quickly than if the equipment for applying is provided with a quantity of water for rinsing and then waiting for it to project and/or spray the said quantity of water provided.

This collects the surplus liquid from treatments with equipment for applying phytosanitary products and/or liquid resulting from cleaning of equipment for applying phytosanitary products, even though the external cleaning is performed manually, such that the environment is not exposed to the phytosanitary products that the said liquids contain.

According to another form (figure 7), taking the previous into account, the said machine comprises means for handling the said tool to clean the inside of equipment for applying phytosanitary products, where in turn the said means comprises a rod or handle (48) screwed at one end to the said tool such that the said rod or handle does not come into contact with the housing or active part of the said tool and it facilitates handling on inserting the said tool into the inside of equipment for applying. In turn, the said rod or handle is hollow and is joined to the said tool such that the pipes for the circuits of the said tool, the said pipes being installed inside the hollow in the rod or handle and such that the said pipes exit the said rod or handle through the opposite end to the tool (49) or they may exit through a lateral opening (50) in the said end.

According to another form, taking the previous into account, the said machine comprises means for closing the filler neck of the equipment for applying during the internal cleaning of the said equipment, which, in turn, comprises a flat part (51) of any shape, preferably circular, which is crossed by the rod or handle through the central part such that the said flat part closes the filler neck of equipment for applying, when the said tool is inserted inside the said equipment, to prevent splashes produced by this tool in its operation from escaping from the said equipment for applying.

According to another form, taking the previous three into account, the said machine comprises means for replenishing equipment for applying phytosanitary products, which, in turn, comprises a dosing unit for water and/or phytosanitary product (52), a refillable water tank (53) and a refillable phytosanitary product tank (54), such that each tank supplies the said dosing unit by means of a pipe (55)(56) with an impulse pump (57)(58). The said dosing unit supplies water and/or phytosanitary product to the said equipment for applying by means of a pipe (59) that is connected to the said pipe (35) that connects the said suction pump (36) to the tube of the internal cleaning tool of the said equipment for applying to suck up liquid, such that the said tube, in addition to sucking up liquid, also supplies water and/or phytosanitary product. The actions of sucking up and supplying are controlled by two solenoid valves (60)(61) that operate alternately by switching the said pipes and that in turn are controlled by the said control panel.

This form makes it possible to avoid exposing people when replenishing equipment for applying phytosanitary products.

According to another form, the said machine comprises means for mixing the phytosanitary products and water. The said means for mixing can mix different products together and also mix the said products with water to obtain the necessary mixture to perform any phytosanitary treatment. The said means comprises a mixer of phytosanitary products and water (62), supplied by a water dosing unit (63) by means of a pipe (64) and supplied by a phytosanitary product dosing unit (65) by means of a pipe (66). The said assembly is connected in the said machine in such a way that the said mixture is supplied by means of a pipe (67) with an impulse pump (68) to the dosing unit that supplies phytosanitary product and/or water to the said equipment for applying (52). The said water dosing unit (63) is supplied by the said refillable water tank (53) by means of the said pipe (55) with the said impulse pump (57) and the said product dosing unit (65) is supplied by the said refillable phytosanitary product tank (54) by means of the said pipe (56) with the said impulse pump (58).

The said mixer in turn comprises at least one water supply and at least one phytosanitary product supply, depending on the quantity of products to be mixed and the quantity of water necessary to make the mixture.

This form makes it possible to avoid exposing people to the mixing of phytosanitary products and replenishing equipment for applying phytosanitary products with the said phytosanitary products.

According to another form, taking the two previous into account, the said machine comprises, connected to the said refillable water tank (53), a water outlet pipe (69) with an impulse pump (70) to supply water to the said components of the said machine that require a water supply.

According to another form, the said machine (figure 8) comprises means for moving the said tool vertically for internal cleaning of equipment for applying, which, in turn, comprises, supported by the said metal structure, a telescopic cylinder (71), which, in turn, supports the said tool at sufficient height to be able to position the said equipment for applying under the said tool.

This form makes it possible to insert and remove the said too mechanically from the said equipment for applying.

According to another form, taking the previous into account, the said machine comprises means for moving the said tool in the horizontal plane, which, in turn, comprises, supported by the said structure, two rails (72) on which a moveable bridge (73) on which a moveable platform (74) supporting the said telescopic cylinder move.

This form makes it possible to move the said tool in any direction.

According to another form, to clean the outside of equipment for applying phytosanitary products, the said machine comprises means for cleaning the outside of the said equipment for applying, which, in turn, comprises at least one tool for cleaning the outside of equipment for applying phytosanitary products (75), wherein the said tool in turn comprises a plurality of mechanisms that project and/or spray water (76) connected by means of a pipe (77) to a water supply controlled by a solenoid valve (78). This form avoids exposing people to cleaning the outside of the said equipment for applying phytosanitary products.

According to another form, taking the previous into account, the said tool comprises means for moving the said at least one tool for cleaning the outside of equipment for applying phytosanitary products, which, in turn, comprises a wheeled platform (79) on the said rails laid on the floor, such that the said tools are installed on the said platform. Moving along the said rails, each at least one tool runs along one side of the said liquid collecting zone to clean the said equipment for applying over its entire surface and more effectively.

The said machine comprises a longer run on the said rails on the floor, such that the said tools for cleaning the outside of equipment for applying phytosanitary products, in the said run, clean, in addition to the outside of the equipment for applying, the outside of tractor vehicles that tow the said equipment for applying. Some equipment for applying is towed by a tractor vehicle that also gets dirty externally when carrying out treatments.

According to another form, taking the previous two into account, the said machine comprises means for projecting air to dry the said equipment after outside cleaning, which, in turn, comprises in the said at least one tool for cleaning the outside of equipment for applying phytosanitary products, a turbine (80) connected to a plurality of mechanisms to project air (81) arranged in such a manner as to direct the air towards the equipment for applying. This form makes it possible to dry the said equipment for applying.

According to another form, the said machine comprises means for cleaning the cover and filter of the equipment for applying The said means comprises an apparatus for cleaning the cover and filter of the equipment for applying (figure 9), comprising in turn a plurality of mechanisms that project water (82) in the walls and roof, at least one bracket to hold the cover (83), at least one bracket to hold the filter (84) and a sump (85) that transfers the liquid by means of a pipe (86) to the said pit (16) to be collected.

To manage proper operation and perform the actions automatically, the said machine uses the control panel that allows selection of the actions to be performed. The said control panel comprises a code reader, such that the said code reader can read data from analyses carried out on crops to replenish automatically in the said equipment for applying the quantity and type of product advised in the said analysis for treating the crop on which the said analysis was performed.

To carry out the method described above, the said installation for recycling phytosanitary products will be used (figure 10), comprising means of treating liquid with phytosanitary products to obtain phytosanitary product and/or water, which, in turn, comprises a water purifier (87) to separate the water from the phytosanitary products, which has an inlet for liquid with phytosanitary products (88), a water outlet (89) and a phytosanitary product outlet (90), characterised in that it comprises means for collecting surplus liquid with phytosanitary products from treatments carried out with equipment for applying phytosanitary products, which, in turn, comprises at least one machine for collecting the said liquid, such as any of those described above, connected by means of the pipe (18) used to draw the liquid collected in the pit of the said machine to the liquid inlet to the purifier (88) to supply it; the water outlet from the purifier is connected, by means of a pipe (91) with an impulse pump (92), to the refillable water tank (53) of the machine to supply water to it, and the product outlet from the purifier connects, by means of a pipe (93) with an impulse pump (94), to the refillable phytosanitary product tank (54) of the said machine to supply it.

This form recycles all the liquid collected by the machine and resolves the aforementioned disadvantages.

According to another form, taking the previous into account, the said machine comprises means for separating phytosanitary products, which, in turn, comprises a phytosanitary product separator (95) with a phytosanitary product inlet (96) and at least two different phytosanitary product outlets (97) and (98), such that the phytosanitary product outlet from the purifier supplies, by means of the said pipe (93) with the said impulse pump (94), the phytosanitary product inlet to the phytosanitary product separator (95), and the at least two outlets from the said separator (97) (98) connect, by means of a pipe (99) (100) each with an impulse pump (101) (102), to the at least two refillable phytosanitary product tanks (54) (103) of the machine, which, in turn, supply at least two phytosanitary product dosing units (65) (104), which, in turn, supply the said phytosanitary product and water mixer (62).

The method described previously can be performed with the said installation, as well as resolving the disadvantages that occur on performing the said actions of the method according to the previous technique.

## Claims

1. A tool for channelling the liquid projected and/or sprayed by equipment for applying phytosanitary products, comprising an essentially concave hollow body, with a central part recessed with respect to the two side parts, defining a first U-shaped channel,and comprising means for projecting and/or spraying water which comprise a plurality of mechanisms (4) that project and/or spray water, whereby the mechanisms are connected by means of a pipe (5) with a solenoid valve (6) to a water supply network (7) and the solenoid valve is controlled by a control panel (8),
**characterised in that**
the tool comprises on each side part at least one longitudinal fold (1) oriented towards the concave part of the body, which in combination with the side part defines a V- to U-shaped second channel designed to prevent the liquid from escaping from the body by the side parts and to channel the liquid inside it into the concave part of the body, the tool comprises a plurality of longitudinal fins (3) in the concave part of the body and oriented towards the central, most deeply recessed part of the body, such that each one of the longitudinal fins (3) forms a V-shaped channelling unit and the formed assembly channels the liquid in a U-shape, using the concave surface of the tool as the common side part of the V-shaped channelling units, and **in that** the plurality of mechanisms (4) that project and/or spray water are disposed in the longitudinal folds (1) in the front part of the tool and oriented such that with their projection and/or spray they direct in the direction of the splashes produced when the equipment for applying phytosanitary products projects and/or sprays liquid into the concave part of the body of the tool.

2. Tool according to claim comprising at least one articulated joint (9) such that it may form an assembly with other tools identical tools to make it possible to arrange the different forms of the tool to adapt to the projections and/or spraying of the different types of equipment for applying phytosanitary products.

3. Tool according to claims 2, wherein it comprises means for securing at least one manual application nozzle for cleaning it, which, in turn, comprises a bracket (11) located in the external part of the tool with two U-shaped supports aligned with an opening (12) in the tool, such that by supporting the manual treatment nozzle on the supports it is opposite the opening, through which it projects and/or sprays liquid into the interior of the tool for it to be channelled; the means also comprise a cover (13) arranged on the opening, which by allowing it to support itself on the manual application nozzle, holds the nozzle against the supports, and covers the bracket and closes the opening if the equipment for applying phytosanitary products does not have the manual application nozzles.

## Patentansprüche

1. Werkzeug zum Kanalisieren der Flüssigkeit, die durch eine Vorrichtung zum Ausbringen von Pflanzenschutzmitteln ausgestoßen und/oder versprüht wird, umfassend einen im Wesentlichen konkaven Hohlkörper mit einem zentralen Teil, der in Bezug auf die beiden Seitenteile vertieft ist und einen ersten U-förmigen Kanal definiert, und umfassend Mittel zum Ausstoßen und/oder Versprühen von Wasser, die eine Vielzahl von Mechanismen (4) umfassen, die Wasser ausstoßen und/oder versprühen, wobei die Mechanismen mittels einer Leitung (5) mit einem Magnetventil (6) mit einem Wasserversorgungsnetz (7) verbunden sind und das Magnetventil durch ein Bedienfeld (8) gesteuert wird,
**dadurch gekennzeichnet, dass** das Werkzeug an jedem Seitenteil mindestens eine Längsfalte (1) aufweist, die auf den konkaven Teil des Körpers ausgerichtet ist und die in Kombination mit dem Seitenteil einen V- bis U-förmigen zweiten Kanal definiert, der dazu bestimmt ist, das Entweichen der Flüssigkeit aus dem Körper durch die Seitenteile zu verhindern und die Flüssigkeit in seinem Inneren in den konkaven Teil des Körpers zu leiten, das Werkzeug eine Vielzahl von Längsrippen (3) im konkaven Teil des Körpers aufweist und zum zentralen, am tiefsten vertieften Teil des Körpers hin ausgerichtet ist, so dass jede der Längsrippen (3) eine V-förmige Kanaleinheit bildet und die erstere Anordnung die Flüssigkeit in einer U-Form kanalisiert, wobei die konkave Oberfläche des Werkzeugs als gemeinsamer Seitenteil der V-förmigen Kanaleinheiten verwendet wird, und dadurch dass die mehreren Mechanismen, die Wasser ausstoßen und/oder versprühen, in den Längsfalten (1) im vorderen Teil des Werkzeugs angeordnet und so ausgerichtet sind, dass sie mit ihrem Ausstoßen und/oder Versprühen in die Richtung der Spritzer gerichtet sind, die entstehen, wenn das Gerät zum Ausbringen von Pflanzenschutzmitteln Flüssigkeit in den konkaven Teil des Körpers des Werkzeugs ausstößt und/oder versprüht.

2. Werkzeug nach Anspruch 1, das mindestens ein Gelenk (9) umfasst, so dass es eine Einheit mit anderen Werkzeugen bilden kann, die identisch sind, um es zu ermöglichen, die verschiedenen Formen des Werkzeugs so anzuordnen, dass sie sich an das Ausstoßen und/oder das Versprühen der verschiedenen Arten von Geräten zum Ausbringen von Pflanzenschutzmitteln anpassen.

3. Werkzeug nach Anspruch 2, wobei es Mittel zur Befestigung von mindestens einer manuellen Ausbringungsdüse zu ihrer Reinigung, die ihrerseits eine im äußeren Teil des Werkzeugs angeordnete Halterung (11) mit zwei U-förmigen Stützen umfasst, die mit einer Öffnung (12) im Werkzeug ausgerichtet sind, so dass sie durch Abstützen der manuellen Ausbringungsdüse auf den Stützen der Öffnung gegenüberliegt, durch die sie Flüssigkeit in das Innere des Werkzeugs ausstößt und/oder versprüht, um sie zu kanalisieren; die Mittel auch eine Abdeckung (13) umfassen, die auf der Öffnung angeordnet ist, die, indem sie sich auf der manuellen Ausbringungsdüse abstützt, die Düse gegen die Stützen hält und die Halterung abdeckt und die Öffnung verschließt, wenn das Gerät zur Ausbringung von Pflanzenschutzmitteln nicht über die manuellen Ausbringungsdüsen verfügt.

## Revendications

1. Outil pour canaliser le liquide projeté et/ou pulvérisé par un équipement pour appliquer des produits phytosanitaires, comprenant un corps creux essentiellement concave, avec une partie centrale en retrait par rapport aux deux parties latérales, définissant un premier canal en forme de U, et comprenant des moyens pour projeter et/ou pulvériser de l'eau qui comprennent une pluralité de mécanismes (4) qui projettent et/ou pulvérisent de l'eau, moyennant quoi les mécanismes sont reliés au moyen d'un tuyau (5) avec une électrovanne (6) à un réseau d'alimentation en eau (7) et l'électrovanne est commandée par un panneau de commande (8), **caractérisé en ce que** l'outil comprend sur chaque partie latérale au moins un pli longitudinal (1) orienté vers la partie concave du corps, qui en combinaison avec la partie latérale, définit un second canal en forme de V à U conçu pour empêcher le liquide de s'échapper du corps par les parties latérales et pour canaliser le liquide à l'intérieur de celui-ci dans la partie concave du corps, l'outil comprend une pluralité d'ailettes longitudinales (3) dans la partie concave du corps et orientées vers le centre, la partie la plus profondément en retrait du corps, de telle sorte que chacune des ailettes longitudinales (3) forme une unité de canalisation en forme de V et que l'ensemble de canalisation canalise le liquide en forme de U, en utilisant la surface concave de l'outil comme partie latérale commune des unités de canalisation en forme de V, et **en ce que** la pluralité de mécanismes qui projettent et/ou pulvérisent de l'eau sont disposés dans les plis longitudinaux (1) dans la partie avant de l'outil et orientés de telle sorte que leur projection et/ou leur pulvérisation soit dirigée en direction des projections produites lorsque l'équipement d'application de produits phytosanitaires projette et/ou pulvérise du liquide dans la partie concave du corps de l'outil.

2. Outil selon la revendication 1, comprenant au moins un joint articulé (9) tel qu'il peut former un ensemble avec d'autres outils identiques pour permettre d'agencer les différentes formes de l'outil pour s'adapter aux projections et/ou à la pulvérisation des différents types d'équipements d'application de produits phytosanitaires.

3. Outil selon la revendication 2, **caractérisé en ce qu'**il comporte des moyens de fixation d'au moins
une buse d'application manuelle pour le nettoyer, qui, à son tour, comprend un support (11) situé dans la partie externe de l'outil avec deux supports en forme de U alignés avec une ouverture (12) dans l'outil, de telle sorte que, en supportant la buse de traitement manuelle sur les supports, elle est opposée à l'ouverture, à travers laquelle elle projette et/ou pulvérise du liquide à l'intérieur de l'outil pour qu'il soit canalisé ; les moyens comprennent également un couvercle (13) disposé sur l'ouverture, qui, en lui permettant de se supporter sur la buse d'application manuelle, maintient la buse contre les supports, et couvre le support et ferme l'ouverture si l'équipement pour appliquer des produits phytosanitaires n'a pas les buses d'application manuelle.
